# EUROPÄISCHE PATENTSCHRIFT

(11) **EP 2 779 824 B1**
(45) Veröffentlichungstag und Bekanntmachung des Hinweises auf die Patenterteilung: **06.04.2016**
(21) Anmeldenummer: 11782627.1
(22) Anmeldetag: 16.11.2011
(51) Int. Cl.: A01G 27/04

(54) **BEWÄSSERUNGSEINRICHTUNG**
WATERING DEVICE
SYSTEME D'ARROSAGE

(43) Veröffentlichungstag der Anmeldung: 24.09.2014
(73) Patentinhaber: HUSQVARNA AB, 561 82 Huskvarna (SE)
(72) Erfinder: ASAL, Benjamin, 89155 Erbach-Ersingen (DE)
(74) Vertreter: Finkele, Rolf
(86) Internationale Anmeldenummer: PCT/EP2011/070298
(87) Internationale Veröffentlichungsnummer: WO 2013/071970

(56) Entgegenhaltungen:
- DE-A1- 2 409 714
- DE-B- 1 064 281
- FR-A1- 2 410 953
- GB-A- 2 127 264

## Beschreibung

Die Erfindung betrifft eine Bewässerungseinrichtung für Topfpflanzen.

Für die Bewässerung von Topfpflanzen sind seit langem Wassertransportleitungen aus faserigem Material bekannt, welche durch die Wirkung des Kapillareffekts Wasser aus einem Vorratsbehälter entgegen der Schwerkraft zu einem höher gelegenen Pflanzsubstrat in einem Pflanzgefäß transportieren und dosiert an das Pflanzsubstrat abgeben.

In einfachster Ausführung sind solche Wassertransportleitungen aus Wollfäden oder aus anderen haushaltsüblichen Fasermaterialsträngen ausgebildet, welche auch durch wasserdichte Führungshüllen umgeben sein können.

Aufwendigere Ausführungen von Bewässerungseinrichtungen weisen typischerweise einen Wasservorratsbehälter mit einem eine Topfstellfläche bildenden Deckel auf. Die Wassertransportleitung kann durch Öffnung des Wasservorratsbehälters aus diesem heraus und über den Topfrand des Pflanztopfes zu dem Pflanzsubstrat geführt sein, wie z.B. in der FR 2 410 953 A offenbart.

Neben den fadenförmigen Wassertransportleitungen sind auch Ausführungen gebräuchlich, bei welchen das faserige Material ein Faserband bildet.

In der GB 2 127 264 A ist eine Vorrichtung beschrieben, bei welcher ein Topf mit seinem unteren Teil ein Wasserreservoir bildet, welches durch eine Abdeckplatte abgedeckt ist. Die Abdeckplatte dient zugleich als Boden eines Pflanzvolumens. Ein Saugband aus faserigem Material verläuft mit einem Mittelabschnitt über einer mittigen Erhebung der Abdeckplatte und tritt dort in wasserabgebenden Kontakt mit einem unteren Bereich eines Pflanzsubstrats in dem Pflanzvolumen. Die entgegen gesetzten Enden des Saugbands sind durch zwei Schlitze entlang einer Federzunge der Abdeckplatte durch diese nach unten geführt und hängen in das Wasserreservoir. Das Saugband und die Abdeckplatte sind nur durch Entfernen des Pflanzsubstrats über der Abdeckplatte zugänglich. Wasser kann über eine seitliche Öffnung des Topfes in das Wasserreservoir eingefüllt werden. Ein Schwimmer mit Indikator zeigt den Füllstand im Reservoir an.

Bei einer aus der US 5 125 184 bekannten Vorrichtung ragen aus mehreren Öffnungen am unteren Rand eines Pflanztopfs Dochte heraus, welche nach Einsetzen des Pflanztopfes in einem Übertopf in ein Wasserreservoir am Boden des Übertopfes hängen und über den Kapillareffekt Wasser aus dem Wasserreservoir in dem Bodenbereich des Pflanztopfes transportieren.

Der vorliegenden Erfindung liegt die Aufgabe zugrunde, eine vorteilhaft handhabbare Bewässerungseinrichtung für Topfpflanzen mit einer nach dem Kapillareffekt wirkenden Wassertransportleitung anzugeben.

Die Erfindung ist im unabhängigen Anspruch beschrieben. Die abhängigen Ansprüche enthalten vorteilhafte Ausgestaltungen und Weiterbildungen der Erfindung.

Durch die seitliche Öffnung der Durchführung der Wasservorratseinrichtung ist die Verbindung der Wassertransportleitung mit der Wasservorratseinrichtung für den Benutzer besonders einfach und unter Vermeidung eines mühsamen Einfädelns in eine umlaufend geschlossene Durchführung zu bewerkstelligen.

Die Wasservorratseinrichtung ist in einem Wasservorratsbehälter und eine dessen obere Öffnung abdeckende Deckelanordnung unterteilt. Die Deckelanordnung bildete vorteilhafterweise auch eine Stellfläche für einen Pflanztopf. Die Wassertransportleitung ist in an sich bekannter Weise an der Außenseite des Pflanztopfs entlang über den Topfrand zu dem Pflanzsubstrat im Pflanztopf geführt.

Die Durchführung für die Wassertransportleitung durch die Wasservorratseinrichtung ist bezüglich der Mitte der Stellfläche gegen die Stellfläche radial nach außen versetzt und in einem Randbereich der Deckelanordnung angeordnet. Die Öffnung der Durchführung führt dann zum die Deckelanordnung radial begrenzenden Rand.

Die Wassertransportleitung ist bandförmig flach ausgeführt und enthält vorzugsweise ein Faserband aus einem faserigen Material, welches den Wassertransport durch den Kapillareffekt entgegen der Schwerkraft von den in dem Wasserbehälter befindlichem ersten Ende des Faserbandes zu dem höher gelegenen zweiten Ende des Faserbandes im Pflanzsubstrat eines Pflanztopfes bewirkt, sowie eine das Faserband in dessen Verlauf zwischen Wasservorratseinrichtung und Pflanzsubstrat wasserdicht und vorzugsweise auch dampfdicht umgebende flache schlauchförmige Hülle, welche auch im Längsverlauf der Wassertransportleitung bei der Durchführung vorliegt. Mit der schlauchförmigen Hülle ist die Handhabung der Wassertransportleitung beim Einführen in die Durchführung quer zur Längsrichtung der Wassertransportleitung besonders vorteilhaft und ohne Verhaken und Beschädigen des Faserbandes leicht durchzuführen.

Die Durchführung in der Wasservorratseinrichtung ist als eine bezüglich des radial außen liegenden Randes der Deckelanordnung in Umfangsrichtung längliche, insbesondere im wesentlichen randparallele Aussparung ausgebildet. Die Öffnung ist vorteilhafteniveise an einem Ende der länglichen Aussparung angeordnet.

Die Aussparung ist radial nach außen durch einen Abschnitt des Außenrands der Deckelanordnung bildenden Randsteg begrenzt. In bevorzugter Ausführung ist die Öffnung in einer Ruhelage des Randstegs enger als für die Einführung der Wassertransportleitung erforderlich und der Randsteg ist entgegen einer Rückstellkraft unter Aufweitung der Öffnung radial nach außen verlagerbar. Vorzugsweise ist der Randsteg einseitig fest mit der Deckelanordnung verbunden und an der Verbindungsstelle oder in seiner Längserstreckung elastisch verformbar.

Die Halteeinrichtung kann in vorteilhafter Ausführung zugleich eine Vertikalabstützung der Stellfläche der Deckelanordnung gegen den Boden des Vorratsbehälters bilden. Insbesondere kann die Halteeinrichtung Teil einer in den Innenraum der Wasservorratseinrichtung ragenden Trennwand sein. Dabei gebildete Teilräume stehen in gegenseitigem Wasseraustausch. Die Unterkante einer solchen Trennwand oder einer vertikal abstützenden Halteeinrichtung kann vorteilhafterweise erste Abschnitte zum unmittelbaren abstützenden Kontakt mit dem Boden des Wasservorratsbehälters und wenigstens einem demgegenüber erhöhten Abschnitt für die Bildung der vorzugsweise spaltförmigen Passage aufweisen.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Bewässerungseinrichtung mit Pflanztopf,
- Fig. 2: eine Draufsicht auf eine Deckelanordnung,
- Fig. 3: einen Randausschnitt zu Fig. 2.

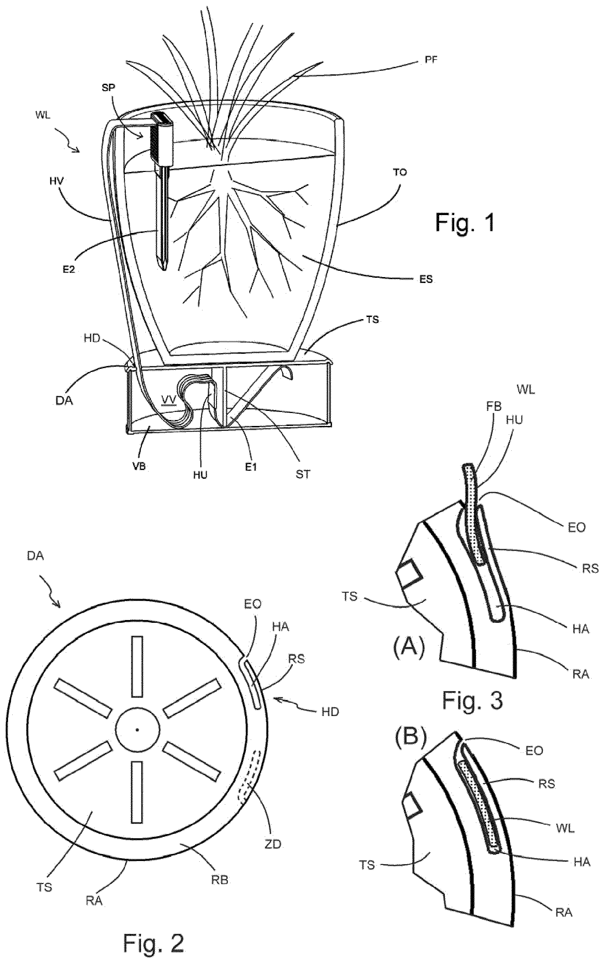

Fig. 1 zeigt in teilweise geschnittener Ansicht eine Topfpflanzen-Bewässerungseinrichtung einschließlich eines Pflanztopfes TO mit einer Pflanze PF, die in einem Pflanzsubstrat ES wurzelt. Der Pflanztopf TO ist auf einer Stellfläche TS der Abdeckung eines Wasservorratsbehälters abgestellt. Die Wasservorratseinrichtung besitzt ein Vorratsvolumen VV in einem topfförmigen Vorratsbehälter VB. Der Behälter VB ist durch eine Deckelanordnung DA überdeckt. Eine Wassertransportleitung WL ist durch eine Durchführung HD in der Deckelanordnung DA aus dem Vorratsvolumen VV hinaus geführt und zu einem Erdspieß SP geleitet, welcher mit einer Spitze in das Pflanzsubstrat ES eingesteckt ist. Die Wassertransportleitung WL enthält insbesondere eine wasserdichte und vorzugsweise auch dampfdichte Hülle HU und innerhalb dieser einen Wasser auf der Basis des Kapillareffekts entgegen der Schwerkraft transportierenden Faserstrang, im skizzierten Beispiel ein Faserband, welches an beiden Enden über die Hülle HU hinaus verlängert ist und mit einem ersten frei liegenden Ende E1 mit Wasser im Vorratsbehälter VB zur Aufnahme von Wasser in Kontakt steht und mit einem zweiten frei liegenden Ende E2 am Erdspieß mit dem Pflanzsubstrat ES zur Abgabe von Wasser an das Pflanzsubstrat in Kontakt steht. Über einen von der Stellfläche TS der Deckelanordnung DA nach unten in das Vorratsvolumen VV ragenden Steg ST ist gewährleistet, dass zumindest ein Teil des frei liegenden ersten Endes E1 des Faserbandes auch bei niedrigem Wasserstand im Vorratsbehälter noch mit Wasser in Kontakt steht.

Die Hülle HU erstreckt sich in Längsrichtung der Wassertransportleitung WL vorteilhafterweise bis zu dem Erdspieß SP und ist dort mechanisch festgelegt, beispielsweise eingeklemmt, wobei die Einklemmung in der Art ist, dass die Hülle HU zugfest am Erdspieß SP gehalten ist, ohne dass aber der Wassertransport durch das Faserband beeinträchtigt ist. Die Verbindung der Hülle HU mit dem Erdspieß SP ist vorzugsweise so, dass der Erdspieß SP mit einer Einführungsöffnung für die Hülle HU eine definierte Ausrichtung des Erdspießes relativ zum oberen Rand des Pflanztopfes TO vorgibt.

Fig. 2 zeigt eine Deckelanordnung DA einer Wasservorratseinrichtung in Draufsicht auf die Stellfläche TS. Die Deckelanordnung sei als im wesentlichen kreisrund angesehen mit einer Kreislinie als einhüllende Randlinie RA und einer durch einen Randbereich RB radial von der Randlinie RA getrennte Stellfläche, welche in sich eine Reliefstruktur aufweisen kann.

Im Randbereich RB ist für die Durchführung HD, durch welche die bandförmige Wassertransportleitung aus dem Vorratsvolumen VV des Wasservorratsbehälters VB heraus führt, eine Aussparung HA vorgesehen. Die Aussparung HA ist in der Draufsicht nach Fig. 2 in Umfangsrichtung langgestreckt ausgeführt und in dieser Form an den Querschnitt der bandförmigen Wassertransportleitung angepaßt.

Die langgestreckte Aussparung HA ist an einem ihrer beiden in Umfangsrichtung entgegen gesetzten Enden über eine zum Rand RA fortführende Öffnung EO nach außen offen und an ihrem in Umfangsrichtung entgegen gesetzten Ende geschlossen. Die Aussparung HA ist über ihren Längsverlauf bis zu der Öffnung EO radial nach außen durch einen schmalen Randsteg RS, welcher vorzugsweise einteilig materialhomogen mit dem Randbereich RB verbunden ist, begrenzt.

Mit unterbrochener Linie ist in Fig. 2 eine zusätzliche Durchführung ZD eingetragen, welche optional vorgesehen sein kann und insbesondere bei der Bewässerung größerer Pflanztöpfe eine zweite Wassertransportleitung aufnehmen kann, so dass mit in sich gleichen Wassertransportleitungen eine höhere Transportleistung an Wasser vom Wasservorratsbehälter zu dem Pflanzsubstrat erreicht werden kann.

Fig. 3 zeigt einen vergrößerten Ausschnitt aus Fig. 2 in einer Situation, in welcher eine Wassertransportleitung WL, welche aus einem Wasser transportierenden Faserband FB und einer dieses wasserdicht umgebenden Hülle HU besteht, aus der Aussparung HA entnommen oder in diese eingesetzt wird. Hierfür ist der Randsteg RS in sich elastisch verformbar und mit seinem freien, der Öffnung EO zuweisenden Ende elastisch reversibel radial nach außen verlagerbar, so dass die Öffnung EO erweitert wird und die Durchführung der Wassertransportleitung WL durch die erweiterte Öffnung EO möglich ist.

Fig. 3 (B) zeigt den Ausschnitt nach Fig. 3 (A) mit vollständig in der Aussparung HA einliegender Wassertransportleitung WL. Der Randsteg RS ist durch die Rückstellkraft der elastischen Verformung wieder im wesentlichen in die in Fig. 2 ohne Wassertransportleitung eingenommene Ausgangslage zurückgekehrt und die Wassertransportleitung ist gegen versehentliches Ausgleiten aus der Aussparung HA gesichert. Vorteilhafterweise kann die Wassertransportleitung WL in der in Fig. 3 (B) dargestellten, in die Aussparung HA als Durchführung eingesetzter Position in geringem Maße elastisch verformt sein, wodurch sich auch in Längsrichtung der Wassertransportleitung eine Haltekraft innerhalb der Aussparung HA ergibt, welche ohne zusätzlich einwirkende Kraft die Wassertransportleitung in der eingenommenen Lage hält, welche aber eine manuelle Verschiebung der Wassertransportleitung in deren Längsrichtung relativ zur Aufnahme HA erlaubt, wie in Fig. 1 durch den Doppelpfeil an der Wassertransportleitung bei der Durchführung HD angedeutet ist.

Durch die Einnahme einer im wesentlichen mit der Randlinie RA übereinstimmenden Position des Randstegs RS bei in die Durchführung eingesetzter Wassertransportleitung WL ist die Gefahr, dass das freie Ende des Randstegs RS störend in Erscheinung tritt und eine Verhakung mit einem Gegenstand, beispielsweise einem Kleidungsstück eines Benutzers verursachen kann, gering. Zugleich ist die Funktion und die Handhabung der aufweitbaren Öffnung für den Benutzer leicht erkennbar und intuitiv verständlich.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen der nachfolgenden Ansprüche in mancherlei Weise abwandelbar.

## Patentansprüche

1. Bewässerungseinrichtung für Topfpflanzen mit einer Wasservorratseinrichtung und einer Wassertransportleitung (WL), wobei
- ein erstes Ende (E1) der Wassertransportleitung (WL) in einem Wasservorratsbehälter (VB) einliegt und ein zweites Ende (E2) der Wassertransportleitung außerhalb der Wasservorratseinrichtung mit einem Pflanzsubstrat (ES) in Kontakt bringbar ist,
- die Wasservorratseinrichtung eine Durchführung (HD) aufweist, durch welche die Wassertransportleitung (WL) hindurch geführt ist und
- die Durchführung (HD) eine seitliche Öffnung (EO) aufweist, durch welche die Wassertransportleitung (WL) quer zu ihrer Längserstreckung in die Durchführung (HD) einbringbar oder entnehmbar ist,
wobei die Wasservorratseinrichtung einen nach oben offenen Wasservorratsbehälter (VB) und eine auf dem Wasservorratsbehälter lösbar aufsetzbare Deckelanordnung (DA) umfasst und die Durchführung (HD) als Aussparung (HA) in der Deckelanordnung (DA) ausgebildet ist,
**dadurch gekennzeichnet,**
**dass** die Wassertransportleitung (WL) bandförmig flach ausgeführt ist und die Durchführung (HD) länglich in Umfangsrichtung eines Randes (RA) der Deckelanordnung (DA) verläuft,
wobei die Durchführung (HD, HA) radial nach außen durch einen in Umfangsrichtung verlaufenden Randsteg (RS) begrenzt ist,
und **dass** die Wassertransportleitung (WL) einen nach dem Kapillareffekt wirkenden Faserstrang (FB) enthält, welcher im Bereich der Durchführung (HD, HA) und außerhalb der Wasservorratseinrichtung von einer wasserdichten Hülle (HU) umgeben ist,
wobei die Hülle (HU) in der in die Aussparung der Durchführung (HD, HA) eingesetzten Position in ihrer Längsrichtung relativ zu der Durchführung (HD, HA) verschiebbar ist.

2. Bewässerungseinrichtung nach Anspruch 1, **dadurch gekennzeichnet, dass** die Aussparung (HA) der Durchführung (HD) die Wassertransportleitung (WL) über wenigstens 75 % ihres Umfangs umgreift.

3. Bewässerungseinrichtung nach einem der Ansprüche 1 oder 2, **dadurch gekennzeichnet, dass** die Wassertransportleitung (WL) bei Abnahme der Deckelanordnung (DA) vom Wasservorratsbehälter (VB) mit der Deckelanordnung (DA) verbunden bleibt.

4. Bewässerungseinrichtung nach einem der Ansprüche 1 bis 3, **dadurch gekennzeichnet, dass** an der Deckelanordnung (DA) ein Befestigungselement zur zugfesten Befestigung der Wassertransportleitung vorgesehen ist.

5. Bewässerungseinrichtung nach einem der Ansprüche 1 bis 4, **dadurch gekennzeichnet, dass** die Deckelanordnung (DA) mit einer nach oben weisenden Fläche eine Stellfläche (TS) für einen Pflanztopf (TO) bildet.

6. Bewässerungseinrichtung nach einem der Ansprüche 1 bis 5, **dadurch gekennzeichnet, dass** die Durchführung (HD) an einem Ende des länglichen Verlaufs eine zum Rand (RA) der Deckelanordnung führende Öffnung (EO) aufweist.

7. Bewässerungseinrichtung nach Anspruch 6, **dadurch gekennzeichnet, dass** die Wassertransportleitung (WL) quer zu ihrer Längserstreckung durch die Öffnung (EO) in die Durchführung (HD) einsetzbar bzw. aus dieser entnehmbar ist.

8. Bewässerungseinrichtung nach einem der Ansprüche 1 bis 7, **dadurch gekennzeichnet, dass** der Randsteg (RS) unter Vergrößerung der Öffnung (EO) von der Durchführung (HD, HA) weg verlagerbar ist, um die Wassertransportleitung (WL) einzusetzen oder zu entnehmen.

9. Bewässerungseinrichtung nach Anspruch 8, **dadurch gekennzeichnet, dass** die Verlagerung des Randstegs (RS) entgegen einer Rückstellkraft erfolgt.

10. Bewässerungseinrichtung nach Anspruch 9, **dadurch gekennzeichnet, dass** der Randsteg (RS) in sich elastisch verformbar ist.

11. Bewässerungseinrichtung nach einem der Ansprüche 1 bis 10, **dadurch gekennzeichnet, dass** in einer Aufbewahrungsstellung die Wassertransportleitung vollständig zwischen Deckelanordnung (DA) und Vorratsbehälter (VB) anordenbar ist.

## Claims

1. Watering device for pot plants, having a water-storage device and a water-transporting line (WL), wherein
- a first end (E1) of the water-transporting line (WL) is located in a water-storage container (VB), and a second end (E2) of the water-transporting line can be brought into contact with a plant substrate (ES) outside the water-storage device,
- the water-storage device has a feedthrough (HD), through which the water-transporting line (WL) is fed, and
- the feedthrough (HD) has a lateral opening (EO), through which the water-transporting line (WL) can be introduced into the feedthrough (HD), or removed therefrom, in a direction transverse to its longitudinal extent,
wherein the water-storage device comprises a water-storage container (VB), which is open in the upward direction, and a lid arrangement (DA), which can be placed in position in a releasable manner on the water-storage container, and the feedthrough (HD) is designed in the form of an aperture (HA) in the lid arrangement (DA),
**characterized**
**in that** the water-transporting line (WL) is configured to be flat in the form of a band, and the feedthrough (HD) runs longitudinally in the circumferential direction of a periphery (RA) of the lid arrangement (DA),
wherein the feedthrough (HD, HA) is bounded radially in the outward direction by a circumferentially running peripheral crosspiece (RS),
and **in that** the water-transporting line (WL) contains a fibre strand (FB), which acts in accordance with the capillary effect and is enclosed by a water-tight casing (HU) in the region of the feedthrough (HD, HA) and outside the water-storage device,
wherein, in the position in which it is inserted into the aperture of the feedthrough (HD, HA), the casing (HU) can be displaced in its longitudinal direction relative to the feedthough (HD, HA).

2. Watering device according to Claim 1, **characterized in that** the aperture (HA) of the feedthrough (HD) engages around the water-transporting line (WL) over at least 75% of the circumference of the latter.

3. Watering device according to either of Claims 1 and 2, **characterized in that**, when the lid arrangement (DA) is removed from the water-storage container (VB), the water-transporting line (WL) remains connected to the lid arrangement (DA).

4. Watering device according to one of Claims 1 to 3, **characterized by** the provision, on the lid arrangement (DA), of a fastening element for fastening the water-transporting line in a tension-resistant manner.

5. Watering device according to one of Claims 1 to 4, **characterized in that** the lid arrangement (DA), by way of an upwardly oriented surface, forms a set-down surface (TS) for a plant pot (TO).

6. Watering device according to one of Claims 1 to 5, **characterized in that** the feedthrough (HD), at one end of the elongate progression, has an opening (EO) leading to the periphery (RA) of the lid arrangement.

7. Watering device according to Claim 6, **characterized in that** the water-transporting line (WL) can be inserted into the feedthrough (HD), or removed therefrom, through the opening (EO) in a direction transverse to its longitudinal extent.

8. Watering device according to one of Claims 1 to 7, **characterized in that** the peripheral crosspiece (RS) can be displaced away from the feedthrough (HD, HA), the opening (EO) being enlarged in the process, in order for the water-transporting line (WL) to be inserted or removed.

9. Watering device according to Claim 8, **characterized in that** the peripheral crosspiece (RS) is displaced counter to a restoring force.

10. Watering device according to Claim 9, **characterized in that** the peripheral crosspiece (RS) is inherently elastically deformable.

11. Watering device according to one of Claims 1 to 10, **characterized in that**, in a storage position, the water-transporting line can be arranged in its entirety between the lid arrangement (DA) and storage container (VB).

## Revendications

1. Système d'arrosage pour des plantes en pot avec un système de réserve d'eau et une conduite de transport d'eau (WL), dans lequel
- une première extrémité (E1) de la conduite de transport d'eau (WL) se trouve dans un récipient de réserve d'eau (VB) et une deuxième extrémité (E2) de la conduite de transport d'eau peut être mise en contact avec un substrat de plante (ES) à l'extérieur du système de réserve d'eau,
- le système de réserve d'eau présente un passage (HD) à travers lequel la conduite de transport d'eau (WL) est menée, et
- le passage (HD) présente une ouverture latérale (EO), à travers laquelle la conduite de transport d'eau (WL) peut être introduite dans ou retirée hors du passage (HD) transversalement à son extension longitudinale, dans lequel le système de réserve d'eau comprend un récipient de réserve d'eau (VB) ouvert vers le haut et un dispositif de couvercle (DA) à poser de façon amovible sur le récipient de réserve d'eau et le passage (HD) est réalisé sous la forme d'une découpe (HA) dans le dispositif de couvercle (DA),
**caractérisé en ce que** la conduite de transport d'eau (WL) est réalisée en forme de bande plate et le passage (HD) s'étend longitudinalement dans la direction périphérique d'un bord (RA) du dispositif de couvercle (DA),
dans lequel le passage (HD, HA) est limité radialement vers l'extérieur par une nervure marginale (RS) s'étendant dans la direction périphérique,
et **en ce que** la conduite de transport d'eau (WL) contient un cordon de fibres (FB) opérant par effet capillaire, qui est entouré par une gaine étanche à l'eau (HU) dans la région du passage (HD, HA) et à l'extérieur du système de réserve d'eau,
dans lequel la gaine (HU) peut se mouvoir dans sa direction longitudinale par rapport au passage (HD, HA) dans la position engagée dans la découpe du passage (HD, HA).

2. Système d'arrosage selon la revendication 1, **caractérisé en ce que** la découpe (HA) du passage (HD) entoure la conduite de transport d'eau (WL) sur au moins 75 % de sa périphérie.

3. Système d'arrosage selon l'une des revendications 1 ou 2, **caractérisé en ce que** la conduite de transport d'eau (WL) reste attachée au dispositif de couvercle (DA) lors de l'enlèvement du dispositif de couvercle (DA) du récipient de réserve d'eau (VB).

4. Dispositif d'arrosage selon l'une quelconque des revendications 1 à 3, **caractérisé en ce qu'**il est prévu sur le dispositif de couvercle (DA) un élément de fixation pour la fixation résistant à la traction de la conduite de transport d'eau.

5. Dispositif d'arrosage selon l'une quelconque des revendications 1 à 4, **caractérisé en ce que** le dispositif de couvercle (DA) forme avec une face tournée vers le haut une face de pose (TS) pour un pot de fleurs (TO).

6. Dispositif d'arrosage selon l'une quelconque des revendications 1 à 5, **caractérisé en ce que** le passage (HD) présente, à une extrémité de son tracé longitudinal, une ouverture (EO) menant au bord (RA) du dispositif de couvercle.

7. Dispositif d'arrosage selon la revendication 6, **caractérisé en ce que** la conduite de transport d'eau (WL) peut être insérée dans le passage (HD), ou retirée hors de celui-ci, par l'ouverture (EO) transversalement à son extension longitudinale.

8. Dispositif d'arrosage selon l'une quelconque des revendications 1 à 7, **caractérisé en ce que** la nervure marginale (RS) peut être écartée du passage (HD, HA) en agrandissant l'ouverture (EO), pour insérer et retirer la conduite de transport d'eau (WL).

9. Dispositif d'arrosage selon la revendication 8, **caractérisé en ce que** le déplacement de la nervure marginale (RS) est effectué contre une force de rappel.

10. Dispositif d'arrosage selon la revendication 9, **caractérisé en ce que** la nervure marginale (RS) est par nature élastiquement déformable.

11. Dispositif d'arrosage selon l'une quelconque des revendications 1 à 10, **caractérisé en ce que** la conduite de transport d'eau peut être disposée entièrement entre le dispositif de couvercle (DA) et le récipient de réserve d'eau (VB) dans une position de conservation.
